# FASCICULE DE BREVET EUROPEEN

(11) **EP 4 080 923 B1**
(45) Date de publication et mention de la délivrance du brevet: **01.11.2023**
(21) Numéro de dépôt: 22169145.4
(22) Date de dépôt: 21.04.2022
(51) Int. Cl.: H04W 8/00, H04L 9/40

(54) **DISPOSITIF ÉLECTRONIQUE DE GESTION DÉCENTRALISÉE DE GROUPE(S) DE COMMUNICATION**
ELEKTRONISCHE VORRICHTUNG ZUR DEZENTRALISIERTEN VERWALTUNG VON KOMMUNIKATIONSGRUPPEN
ELECTRONIC DEVICE FOR DECENTRALISED MANAGEMENT OF COMMUNICATION GROUP(S)

(30) Priorité: 22.04.2021 FR 2104189
(43) Date de publication de la demande: 26.10.2022
(73) Titulaire: THALES, 92400 Courbevoie (FR)
(72) Inventeur: SALIBA, Eric, 92622 GENNEVILLIERS CEDEX (FR); BONNAFOUX, Luc, 92622 GENNEVILLIERS CEDEX (FR); THIERRY, Benjamin, 92622 GENNEVILLIERS CEDEX (FR)
(74) Mandataire: Lavoix

(56) Documents cités:
- WO-A1-2020/064840
- US-A1- 2007 150 742
- KELAGADI HEMANTARAJ M ET AL: "A Cluster-tree based Topology Control for Wireless Sensor Network", 2018 INTERNATIONAL CONFERENCE ON ELECTRICAL, ELECTRONICS, COMMUNICATION, COMPUTER, AND OPTIMIZATION TECHNIQUES (ICEECCOT), IEEE, 14 décembre 2018 (2018-12-14), pages 643-649, XP033719116, DOI: 10.1109/ICEECCOT43722.2018.9001417

## Description

La présente invention concerne un dispositif électronique de gestion décentralisée de groupe(s) de communication et un groupe de communication associé.

L'invention se situe dans le champ des protocoles de gestion des réseaux propres à être utilisés pour communiquer par un utilisateur, sur des réseaux d'infrastructures civiles ou militaires ou sur des réseaux maillés de communication civiles ou militaires.

Lors du déploiement d'un groupe d'utilisateurs, la génération des configurations des services pour l'utilisateur constitue une étape nécessaire mais laborieuse à mettre en oeuvre. Une telle configuration vise à mettre en place à la fois les moyens réseaux mais aussi applicatifs et cryptographiques pour permettre les communications au sein des groupes d'utilisateurs.

La mise en oeuvre d'une telle configuration doit être effectuée avec pour objectif de limiter les contraintes opérationnelles sur les utilisateurs au strict minimum et en particulier, utiliser des moyens non spécifiques, non centralisés et n'exigeant pas de compétences techniques spécifiques, et ce tout en évitant d'induire une réduction des principes de sécurité essentiels que sont la génération et la distribution protégées des paramètres qui configurent les services de l'utilisateur et assurent la protection des échanges au sein de groupes fermés d'utilisateurs.

Dans le cadre opérationnel, un utilisateur doit pouvoir monter des groupes de communications, un groupe de communication correspondant à un ensemble d'équipements partageant des services de communications sécurisés sur un réseau, et ce de façon dynamique entre équipements en ne nécessitant idéalement aucune planification préalable. Le brevet WO 2020/064840 illustre la gestion de tels groupes dans le cadre d'un contexte de communications type V2X "vehicle to every thing".

Dans le contexte militaire, s'ajoute à cette problématique la contrainte de minimiser l'impact de la compromission d'un équipement ou d'une infrastructure du réseau, en réduisant le nombre de secrets partagés et leur périmètre.

Par ailleurs, pour répondre aux besoins précités, il est nécessaire de prendre en compte les contraintes des réseaux sous-jacents en terme de capacités de transmission, à savoir la bande-passante, la portée, la diffusion, etc., ainsi que les contraintes d'impact en termes de taille poids et puissance SWaP (de l'anglais *Size, Weight, and Power),* en particulier énergétique.

Des techniques actuelles sont basées sur l'utilisation de moyens spécifiques centralisés présentant cependant une contrainte importante pour des opérationnels à forte mobilité et utilisant des moyens génériques. Autrement dit, une telle gestion centralisée nécessite des moyens spécifiques et des compétences utilisateur associées spécifiques pour l'établissement des services de communication sécurisés d'un groupe d'utilisateur sur un réseau maillé, ce qui induit des contraintes de sécurité et de logistique inadaptées, notamment à des communications tactiques, via des équipements de communication banalisés (i.e. standards), dont la durée de sensibilité des informations est brève.

D'autres techniques actuelles sont basées sur des publications de « gestions de groupe » en utilisant des protocoles de gestion spécifique portant uniquement sur la distribution de matériels cryptographiques pour la protection des communications au sein d'un groupe de communication, sans se préoccuper de la configuration réseau, notamment du contrôle d'accès aux ressources réseaux des équipements radio.

L'invention a pour objet de remédier aux inconvénients de l'état de la technique en évitant une gestion de groupe centralisée et les contraintes associées précitées.

A cet effet, l'invention propose un dispositif électronique de gestion décentralisée de groupe(s) de communication selon la revendication 1.

Ainsi, la solution selon la présente invention permet une gestion décentralisée au niveau de l'utilisateur final en utilisant le dispositif selon la présente invention, par exemple embarqué au sein d'un équipement de communication standard, générique et identique à tous les équipements qui seront utilisés par les membres du groupe de communication, tel qu'un équipement radio portatif, comme moyen dual permettant à un utilisateur de communiquer au sein de groupes de communication avec le mode abonné, mais également de créer et de gérer les groupes de communication en tant que contrôleur.

De tels équipement de communication standards génériques et identiques à tous les équipements qui seront utilisés par les membres du groupe de communication et embarquant le dispositif électronique de gestion décentralisée selon la présente invention sont propres à permettre à eux seuls de déployer le réseau et les services sécurisés d'un groupe de communication donné.

L'invention a également pour objet un groupe de communication selon la revendication 9. Les revendications dépendantes illustrent les modes de réalisation préférés de l'invention.

Les termes programme d'ordinateur et logiciels sont utilisés par la suite dans un sens général pour faire référence à tout type de code informatique (par exemple un logiciel d'application, un micro logiciel, un micro code, out toute autre forme d'instruction d'ordinateur) qui peut être utilisé pour programmer un ou plusieurs processeurs pour mettre en oeuvre le procédé de création et de gestion d'au moins un groupe de communication ou, de manière duale, un procédé d'abonnement et d'accès à au moins un groupe de communication existant tel que définis ci-dessus.

Ces caractéristiques et avantages de l'invention apparaîtront plus clairement à la lecture de la description qui va suivre, donnée uniquement à titre d'exemple non limitatif, et faite en référence aux dessins annexés sur lesquels :
- [Fig. 1] la figure 1 est une vue schématique d'un exemple d'infrastructure de réseau de communication au sein de laquelle des groupes de communication sont propres à être formés et à communiquer ;
- [Fig. 2] la figure 2 est une vue schématique du dispositif électronique selon la présente invention propre à fonctionner selon au moins deux modes de fonctionnement duaux et représente également les capacités fonctionnelles respectivement associées à chacun de ces modes ;
- [Fig. 3] la figure 3 est une représentation schématique de l'architecture structurelle du dispositif électronique selon la présente invention.

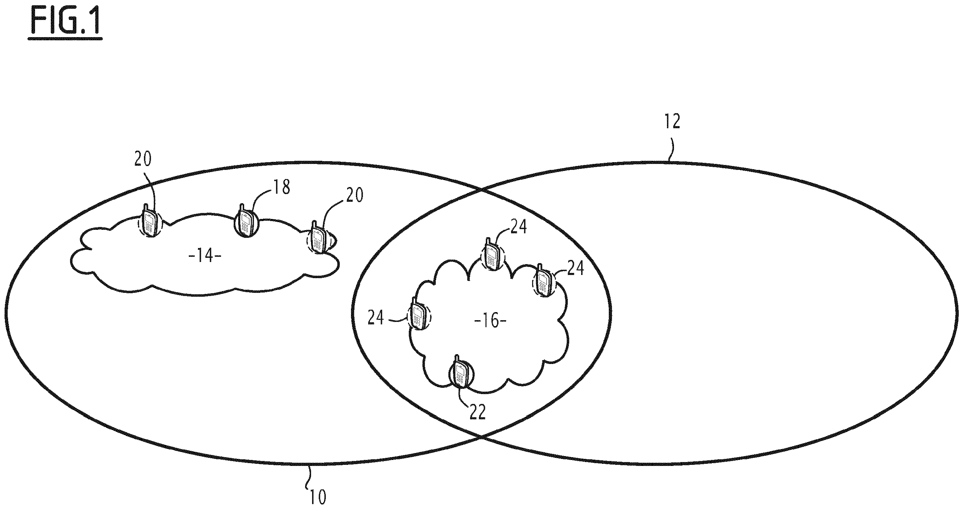

Sur l'exemple de la figure 1, deux réseaux de communication 10 et 12 sont représentés. Chaque réseau 10 et 12 est constitué de groupes de communication 14 et 16 correspondant chacun à un ensemble d'équipements 18, 20 et 22, 24 capables de communiquer les uns avec les autres. De plus, chaque réseau 10 et 12 est propre à être mis en oeuvre en utilisant plusieurs formes d'ondes différentes (i.e. communications sans fil) ou au moyen de connexions filaires, par exemple via une connectivité réseau sans fils de type champ proche NFC (de l'anglais *Near Field Communication*) ou encore Bluetooth ^{®} ou de longue portée tel que les réseaux conformes à la norme LTE (de l'anglais *Long Term Evolution)* ou conforme à d'autres formes d'ondes propriétaires.

Par équipement 18, 20, 22 et 24, on entend par la suite un poste radio permettant des communications de données et de voix sur un réseau filaire ou une forme d'onde. De tels équipement comportent alors nécessairement les éléments strictement nécessaires au fonctionnement des couches réseaux des réseaux utilisés, tels que les fréquences allouées, les clés de services réseaux et de services de communication communes à ces réseaux utilisés.

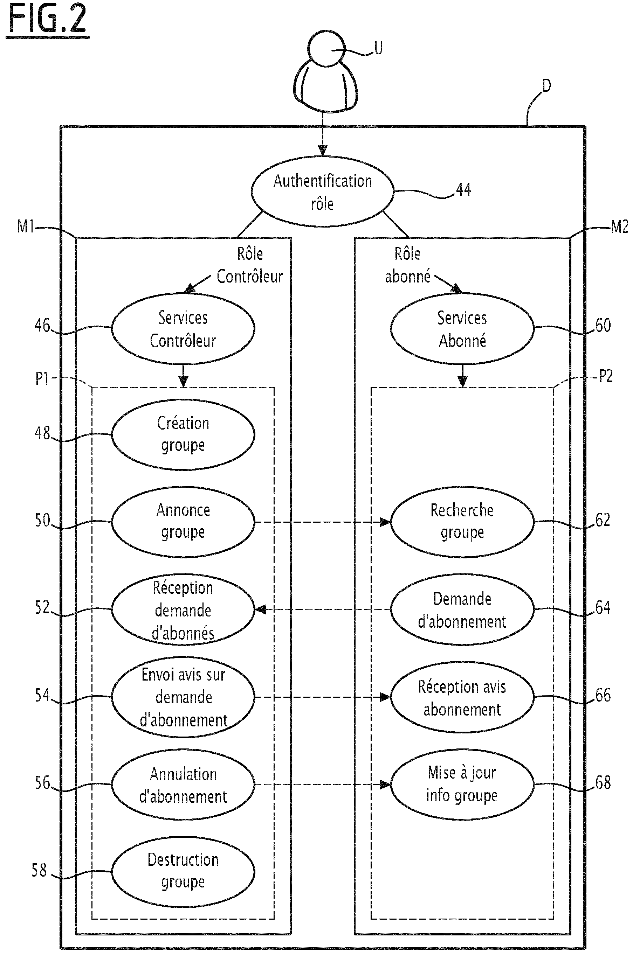

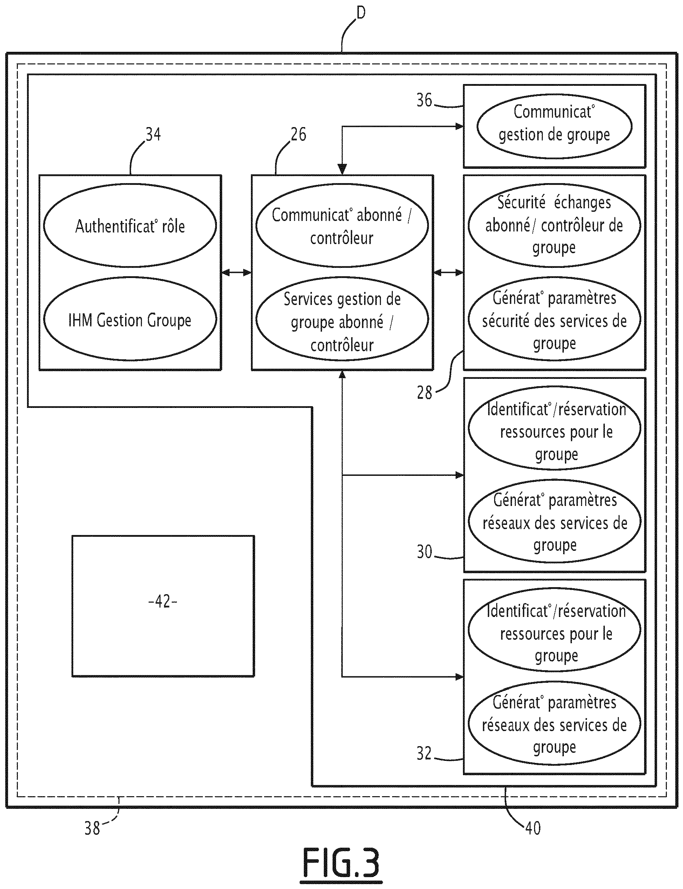

Chaque équipement 18, 20, 22 et 24 est par ailleurs associé à un identifiant unique, par exemple un identifiant IMEI (de l'anglais *International Mobile Equipment Identity)* correspondant à une suite de quinze chiffres prédéterminés, ainsi que deux bi-clés signés par une autorité de confiance lui permettant, via le dispositif électronique de gestion décentralisée de groupe(s) de communication selon la présente invention décrit ci-après en relation avec les figure 2 et 3, de s'authentifier et de négocier des clés auprès d'autres équipements.

Chaque personne ou système utilisant un tel équipement 18, 20, 22 et 24 est appelé par la suite utilisateur et est associé à un nom d'utilisateur prédéterminé qui lui est propre.

Plus précisément, selon la présente invention, un groupe de communication 14 ou 16 correspond à un ensemble d'équipements 18, 20, ou 22, 24 respectivement, partageant un ensemble de services de communication sécurisés sur un réseau filaire ou sans fil utilisant une forme d'onde qui lui est propre. Par service de communication, on entend une capacité de communication de voix ou de données entre l'ensemble d'équipements du groupe considéré, chaque service étant associé, au sein d'un même groupe de communication 14 ou 16 considéré, à un identifiant de service unique, à un protocole de chiffrement qui lui est propre et à un niveau de diffusion correspondant à la portée des échanges associés audit service, tel qu'un niveau de diffusion groupe concernant uniquement les équipements dudit groupe considéré ou encore un niveau de diffusion réseau concernant l'ensemble des équipements appartenant au même réseau.

Par exemple, si l'on considère le réseau 10, le niveau de diffusion groupe au sein du groupe 14 concerne les échanges entre les équipements 20 et 18 du groupe de communication 14, alors que le niveau de diffusion réseau concerne les échanges entre les équipements 18, 20, 22 et 24, le groupe 16 étant à cheval sur les deux réseaux de communication 10 et 12. En revanche, tel qu'illustré par la figure 1, si l'on considère le réseau 12, le niveau de diffusion groupe associé au groupe 16 et le niveau de diffusion réseau associé au réseau 12 sont identiques et concerne les échanges entre les équipements 22 et 24.

Les communications associées à de tels services de communication sont sécurisées au moyen d'une ou plusieurs clés symétriques de protection partagées entre tous les équipements d'un même groupe.

De plus, chaque groupe 14 ou 16 est associé à :
- un nom de groupe prédéterminé qui lui est propre et correspondant par exemple à une chaine, par exemple conforme à une règle de nommage numérique prédéterminée.
- une liste « d'équipements contrôleurs » lorsque, tel que décrit par la suite en relation avec la figure 2, un mode contrôleur du dispositif électronique de gestion décentralisée de groupe selon la présente invention est activé, permettant à l'équipement embarquant un tel dispositif avec le mode contrôleur activé de prendre en charge la gestion du groupe de communication considéré, en lui octroyant des droits de création/suppression de groupe de communication, et d'ajout et/ou de retrait d'équipement au sein dudit groupe de communication considéré ;
- une liste « d'équipements abonné » lorsque, tel que décrit par la suite en relation avec la figure 2, un mode abonné (dual du mode contrôleur précité) du dispositif électronique de gestion décentralisée de groupe selon la présente invention est activé, permettant à l'équipement embarquant un tel dispositif avec le mode abonné activé de rejoindre le groupe de communication considéré et d'utiliser les services de communication mis à disposition au sein dudit groupe de communication considéré ;
- un ensemble de clés secrètes connues uniquement des seuls membres du groupe de communication considéré et leur permettant de communiquer de manière sécurisée entre eux,
- une liste de services de communication mis à disposition au sein dudit groupe de communication considéré.

Sur l'exemple de la figure 1, au sein du groupe de communication 14, l'équipement contrôleur est l'équipement 18 (entouré par un trait plein), et le groupe de communication 14 comprend deux équipements abonnés 20 (entouré par des traits en pointillés), et au sein du groupe de communication 16, l'équipement contrôleur est l'équipement 22 (entouré par un trait plein), et le groupe de communication 14 comprend trois équipements abonnés 24 (entouré par des traits en pointillés).

La figure 2 est une vue schématique du dispositif électronique D, selon la présente invention, présent au sein de chaque équipement 18, 20, 22 et 24 de la figure 1 précédemment décrite, et propre à fonctionner selon au moins deux modes M₁ et M₂ de fonctionnement duaux et représente également les capacités fonctionnelles respectivement associées à chacun de ces modes M₁ et M₂.

Autrement dit, le dispositif D est un dispositif électronique de communication propre à fonctionner selon au moins deux modes de fonctionnement duaux M₁ et M₂ comprenant : un mode contrôleur M₁ configuré pour créer et gérer au moins un groupe de communication, et un mode abonné M₂ configuré pour accéder à au moins un groupe de communication existant et pour utiliser les services de communication associés audit au moins un groupe de communication existant.

Selon un aspect particulier, le mode contrôleur M₁ est activé en fonction du rôle de l'utilisateur U, par exemple ayant un rôle de chef de groupe au sein dudit au moins groupe de communication, tandis que le mode abonné M₂ est disponible par défaut.

Plus précisément, dans chaque groupe de communication 14, 16 de la figure 1, le dispositif électronique de communication D de chaque utilisateur U dudit groupe de communication est identique et associé à un identifiant unique et distinct de chaque identifiant unique associé à chaque autre dispositif électronique D de communication de chaque utilisateur dudit groupe de communication. Autrement dit, au sein du groupe de communication 14 de la figure 1, les trois équipements contrôleur 18 et abonnés 20 comprennent chacun un dispositif électronique D de communication identique, et associé à un identifiant unique, dans l'équipement contrôleur 18, le mode contrôleur M₁ est activé alors que dans chaque équipement abonné 20, le mode abonné M₂ est activé.

Les procédés (i.e. protocoles de communication) duaux P₁ et P₂, respectivement associés aux modes de fonctionnement contrôleur M₁ et abonné M₂ seront détaillés par la suite après description de l'architecture structurelle du dispositif électronique D selon la présente invention telle qu'illustrée par la figure 3.

En particulier, tel qu'illustré par la figure 3, le dispositif électronique D comprend pour mettre en oeuvre le mode contrôleur un module de gestion de groupe 26 propre à :
- configurer au moins une interface réseau en fonction de la mission associée audit au moins un groupe de communication ;
- configurer le ou les services réseaux et communication, associés à au moins un réseau, et nécessaire(s) à la mission associée audit au moins un groupe de communication géré par ledit dispositif électronique D de gestion décentralisée de groupe(s) de communication en mode contrôleur.

Autrement dit, un tel module de gestion de groupe 26 est propre à gérer les communication (« communication » étant indiqué sous sa forme abrégée communicat° sur la figure 3) abonné/contrôleur et les services de gestion associés.

Le dispositif électronique D comprend en outre un module de sécurité 28 propre à fournir, audit module de gestion 26 de groupe, les fonctions cryptographiques nécessaires à :
- la négociation de clés de session et d'appairage entre le dispositif en mode contrôleur et le ou les dispositif(s) en mode abonné,
- l'authentification de chaque autre dispositif électronique de communication propre à requérir l'accès audit au moins un groupe de communication géré par ledit dispositif électronique de gestion décentralisée de groupe(s) de communication en mode contrôleur,
- la sécurisation des échanges au sein dudit au moins un groupe de communication, et
- la génération de clés de protection des services réseaux nécessaire(s) à la mission associée audit au moins un groupe de communication.

Autrement dit, un tel module de sécurité 28 est propre à gérer la sécurité des échanges entre abonné(s) et contrôleur au sein d'un même groupe de communication géré par ledit contrôleur, et propre à assurer la génération (« génération » étant indiqué sous sa forme abrégée générat° sur la figure 3) de paramètres de sécurités associés aux services fournis au sein dudit groupe.

Le dispositif électronique D comprend en outre un ou plusieurs module(s) 30, 32 de gestion de réseaux propres à :
- l'identification des ressources réseaux disponibles sur le réseau support des services du groupe de communication,
- l'allocation desdites ressources au groupe de communication pour la mise en oeuvre de ses services,
- la génération des paramètres de configuration de l'interface réseau.

Sur l'exemple de la figure 3, le dispositif électronique D est notamment embarqué au sein de l'équipement contrôleur 22 du groupe de communication 16 de la figure 1 et comprend le module de gestion réseau 30 dédié au réseau 10 et le module de gestion 32 dédié au réseau 12.

Chacun de ces modules de gestion réseau 30 et 32 est propre à fournir une identification/réservation (« identification » étant indiqué sous sa forme abrégée identificat° sur la figure 3) de ressources pour le groupe de communication considéré, par exemple le groupe de communication 16 de la figure 1, et propre à assurer la génération (« génération » étant indiqué sous sa forme abrégée générat° sur la figure 3) de paramètres réseaux des services de groupe.

En complément facultatif, le dispositif électronique D comprend une interface utilisateur locale 34.

De plus, le dispositif électronique D comprend un module de transmission/réception 36 de trame(s) de signalisation associées à la gestion dudit au moins un groupe de communication pour fournir une interface de communication locale au sein dudit groupe de communication considéré.

En particulier, l'interface utilisateur locale 34 optionnelle est propre à fournir une authentification (« authentification » étant indiqué sous sa forme abrégée authentificat° sur la figure 3) du rôle de l'utilisateur U de l'équipement 18, 20, 22 ou encore 24 embarquant le dispositif électronique D selon la présente invention, et comprend optionnellement un interface homme-machine IHM à l'utilisateur pour la gestion du groupe de communication considéré.

Selon un aspect particulier non représenté, une telle interface utilisateur locale 34 optionnelle IHM est déportée en dehors du dispositif électronique D, notamment sur un terminal déporté tel qu'une tablette, et permet l'interaction de l'utilisateur U avec la fonction de gestion de groupes de communication, notamment lorsqu'il endosse le rôle de contrôleur.

Cette interface IHM est propre à présenter une complexité variable en correspondant par exemple à une tablette numérique déportée tel qu'indiqué précédemment, ou à un ensemble de boutons physiques embarqués au sein du dispositif électronique D, ou basé sur l'utilisation de commande(s) vocale(s) dispositif électronique D, ou encore conforme à une spécification technique prédéterminée, etc.

Dans son utilisation la plus simple (i.e. dégradée) via une liaison courte portée, par exemple de type NFC (de l'anglais *Near Field Communication*), aucune IHM déportée n'est nécessaire, le rapprochement physique des équipements suffisant à les accueillir ou non dans le groupe de communication de communication considéré, et un logiciel non représenté du dispositif électronique D permettant alors d'automatiser certaines fonctionnalités des procédés duaux P₁ de contrôleur ou P₂ d'abonné (i.e. protocoles de communication).

A titre d'alternative, l'IHM est connectable/déconnectable 34 du dispositif électronique D. Connectée, l'IHM 34 permet alors à l'utilisateur U d'interagir avec le dispositif électronique D pour créer et définir au moins un groupe de communication (mode en ligne (de l'anglais *online*) de l'utilisateur U), déconnectée l'IHM 34 ne permet pas à l'utilisateur U d'interagir avec le dispositif électronique D pour créer et définir au moins un groupe de communication (mode hors ligne (de l'anglais *offline*) de l'utilisateur U).

Selon une variante particulière optionnelle, une telle IHM 34 comprend une liste de modèles de création de groupe de communication prédéfinis afin de fournir une définition simplifiée et une assistance (i.e. un guidage) à l'utilisateur dans la création de groupe.

En complément facultatif, une telle IHM 34 permet à chaque utilisateur U de s'identifier, suivant le mode contrôleur M₁ ou le mode abonné M₂, par saisie manuelle, reconnaissance vocale, utilisation d'un badge, etc. de son identifiant opérationnel utilisateur, ce qui permet à l'utilisateur U de s'associer avec son équipement via le dispositif électronique D selon la présente invention, et de fournir un identifiant unique et distinct à chaque utilisateur dudit groupe de communication.

Autrement dit, tel qu'illustré par les flèches de la figure 3, le module 26 de gestion de groupe interagit avec le ou les modules de gestion réseaux 30 et 32, de même qu'avec le module de sécurité 28 pour la génération, en mode contrôleur M₁, et la configuration, en mode abonné M₂ des paramètres réseau, et respectivement sécurité, spécifiques au groupe de communication créé. Plus précisément, le module 26 de gestion de groupe s'appuie sur le module de sécurité 28 propre à lui fournir les fonctions cryptographiques nécessaires à l'authentification d'autres dispositifs électronique D (ou équipement les embarquant voire de leur utilisateurs), à la sécurisation des échanges (protocoles de gestion de groupe P₁ et P₂ tel que détaillés par la suite) et à la génération des clés des services réseaux et des services communication pour le groupe de communication considéré.

De manière non représentée sur la figure 3, le dispositif électronique D comprend, pour mettre en oeuvre le mode abonné M₂, au moins :
- un module de recherche de groupe de communication propre à générer une trame de signalisation prédéterminée de recherche de groupe à destination d'un dispositif électronique de gestion décentralisée de groupe(s) de communication en mode contrôleur d'un groupe de communication prédéterminé, ou à destination de tout autre dispositif électronique de gestion décentralisée de groupe(s) de communication en mode contrôleur ;
- un module d'abonnement propre à générer une trame de signalisation prédéterminée d'abonnement, à transmettre via ledit module de transmission/réception, à destination d'un dispositif électronique de gestion décentralisée de groupe(s) de communication en mode contrôleur d'un groupe de communication prédéterminé,
- un module de retrait propre à générer une trame de signalisation prédéterminée de demande de retrait d'un groupe de communication auquel ledit dispositif est abonné, et propre à effacer tout élément relatif audit groupe de communication auquel ledit dispositif signifie son retrait.

Selon un aspect particulier non représenté sur la figure 3, chaque dispositif électronique D de gestion décentralisée de groupe(s) de communication embarqué au sein d'un équipement 18, 20, 22 et 24 de la figure 1 possède un compteur monotone strictement croissant. Ce compteur est initialisé à une valeur aléatoire lors de sa conception/production. Ce compteur est incrémenté de un à chaque envoi de trame de signalisation. Par exemple, un tel compteur monotone correspond à un compteur sur trente-deux bits non signés.

Dans l'exemple de la figure 3, le dispositif électronique D de gestion décentralisée de groupes de communication comprend au moins une unité 38 de traitement d'informations formée par exemple d'une mémoire 40 et d'un processeur 42 associé à la mémoire 40.

Dans l'exemple de la figure 3, le module de gestion de groupe 26, le module de sécurité 28, le ou les modules de gestion de réseaux 30 et 32, le module de transmission/réception 36, les modules non représentés de recherche, d'abonnement et de retrait associé au mode abonné M₂, et optionnellement l'interface utilisateur locale 34 sont réalisés chacun sous forme d'un logiciel, ou d'une brique logicielle, exécutables par ledit processeur 42 du dispositif électronique D. La mémoire 40 du dispositif électronique D est alors apte à stocker au moins un logiciel correspondant à chacun de ces éléments 26, 28, 30, 32, 36, aux modules non représentés de recherche, d'abonnement et de retrait associé au mode abonné M₂ et optionnellement à l'interface 34. Le processeur 42 est alors apte à exécuter au moins un ou chacun de ces logiciels.

En variante non représentée, le module de gestion de groupe 26, le module de sécurité 28, le ou les modules de gestion de réseaux 30 et 32, le module de transmission/réception 36, les modules non représentés de recherche, d'abonnement et de retrait associé au mode abonné M₂, et optionnellement l'interface utilisateur locale 34 sont réalisés chacun sous forme d'un composant logique programmable, tel qu'un FPGA (de l'anglais *Field Programmable Gate Array*), ou encore sous forme d'un circuit intégré dédié tel qu'un ASIC (de l'anglais *Application Spécifie Integrated Circuit*).

Lorsque le dispositif électronique D est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est, une mémoire ROM ou une mémoire RAM, tout type de mémoire non volatile par exemple EPROM, EEPROM, FLASH, NVRAM.... Sur le support lisible est alors mémorisé un programme d'ordinateur comprenant des instructions logicielles.

Plus précisément, tel qu'illustré par la figure 2, le module de gestion de groupe 26 de la figure 3 est, lorsque le mode contrôleur M₁ du dispositif électronique D est activé, en outre configuré pour :
- créer ledit au moins un groupe de communication en générant une liste de services réseaux et communication associés audit groupe et le nombre maximal d'abonnés possible audit groupe;
- rendre ledit au moins un groupe de communication visible sur au moins un réseau en signalant sa présence par génération, et transmission via le module de transmision/réception, d'une trame de signalisation prédéterminée d'annonce sur une durée prédéfinie ;
- authentifier au moins un autre dispositif électronique de communication distinct dudit dispositif électronique de gestion décentralisée de groupe(s) de communication en mode contrôleur et s'authentifier auprès dudit au moins un autre dispositif électronique de communication ;
- autoriser, lors d'une phase d'abonnement, l'accès audit groupe de communication à au moins un autre dispositif électronique de communication distinct dudit dispositif électronique de gestion décentralisée de groupe(s) de communication en mode contrôleur, ledit au moins un autre dispositif électronique de communication devenant abonné dudit groupe de communication ;
- créer ou supprimer un service réseaux et communication disponible au sein dudit groupe de communication respectivement en ajoutant, ou en supprimant, une nouvelle capacité de communication selon un format prédéfini et en générant, et transmettant via le module de transmission/réception, aux abonnés dudit au moins un groupe une trame de signalisation prédéterminée de création, ou respectivement de suppression, de service ;
- détruire ledit au moins un groupe de communication par génération, et transmission via le module de transmission/réception, une trame de signalisation prédéterminée de destruction à l'ensemble des abonnés dudit au moins un groupe de communication, en fonction de la durée de la mission associée audit au moins un groupe.

En complément facultatif, ledit module de gestion de groupe 26 est en outre configuré pour déléguer à au moins un abonné des capacités de gestion associées audit au moins un groupe de communication en octroyant audit au moins un abonné les droits associés lors de la phase d'abonnement.

En complément facultatif, ledit module de gestion de groupe 26 est en outre configuré pour créer ledit au moins un groupe de communications à partir de plusieurs réseaux supports et pour configurer les services réseaux et communications nécessaires à la mission en fonction des ressources réseaux dudit groupe de communications.

Chacune des capacités du module de gestion de groupe 26 sont par la suite décrites en relation avec la figure 2 utilisée également pour détailler les étapes des procédés (i.e. protocoles de communication) duaux P₁ et P₂.

Plus précisément, selon une première étape 44, notamment via l'interface utilisateur locale 34 optionnelle, le dispositif électronique D met en oeuvre une étape d'authentification du rôle de l'utilisateur U. Un tel rôle de contrôleur ou d'abonné est notamment reçu via le module 36 de transmission/réception en fonction de l'implication de l'utilisateur U dans les structures de communications.

En fonction du rôle alloué à l'utilisateur U un mode de fonctionnement parmi les modes de fonctionnement de contrôleur M₁ et d'abonné M₂ est activé au sein du dispositif électronique D et différents services sont respectivement associés. En particulier pour le rôle de contrôleur, des services contrôleur sont associés selon une étape 46 au mode de fonctionnement de contrôleur M₁ et le procédé de contrôleur P₁ est propre à être mis en oeuvre pour assurer la création d'un groupe de communication depuis sa création jusqu'à sa destruction.

Il est à noter qu'un même utilisateur U est propre à être par exemple contrôleur d'un premier groupe de communication et simultanément abonné d'un deuxième groupe de communication distinct du premier groupe de communication.

Selon une première étape 48 du procédé de contrôleur P₁, le dispositif électronique D, via son module de gestion de groupe 26 met en oeuvre la création d'un groupe en lui attribuant un nom unique de manière à éviter des conflits de nom, par exemple conformément à une règle de nommage numérique prédéterminée, et le cas échéant en générant une liste de services réseaux et communication associés audit groupe et le nombre maximal d'abonnés possible audit groupe de communication.

Simultanément à cette création de groupe, le module de sécurité 28 génère, sur requête du module de gestion de groupe 26, les éléments cryptographiques propres à la gestion du groupe.

Selon une étape 50, du procédé de contrôleur P₁, le dispositif électronique D, via son module de gestion de groupe 26 et son module de transmission/réception 36, rend le groupe de communication créé visible sur au moins un réseau en l'annonçant sur ledit réseau de sorte à signaler sa présence aux autres équipements présents sur le même réseau.

En particulier, une telle annonce de la présence du groupe de communication créé est réalisée via la transmission de trames de signalisation prédéterminées contenant un ensemble de protections cryptographiques permettant de s'assurer de son authenticité, de son intégrité et du fait qu'elle ne soit pas rejouée.

Comme décrit par la suite en relation avec le procédé P₂ d'abonnement, mis en oeuvre par un équipement abonné, réciproquement, un équipement dont le dispositif électronique D selon la présente invention est en mode abonné M₂ activé est propre à rechercher un tel groupe de communication annoncé sur le réseau et à s'y abonner en générant et transmettant une demande d'abonnement sous la forme d'une trame de signalisation prédéterminée d'abonnement, via le module de transmission/réception 36, à destination du dispositif électronique D de gestion décentralisée du groupe de communication considéré en mode contrôleur M₁. Une telle trame de signalisation prédéterminée d'abonnement comprend les identifiants dudit équipement souhaitant s'abonner ainsi que les éléments nécessaires pour établir un canal sécurisé entre ledit équipement souhaitant s'abonner et l'équipement contrôleur embarquant dispositif électronique D de gestion décentralisée du groupe de communication considéré en mode contrôleur M₁, autrement dit, des éléments permettant à ces deux équipements de d'authentifier mutuellement.

Selon un aspect particulier, il est à noter qu'une fois que chaque abonné cible de l'annonce a rejoint le groupe ainsi crée et annoncé, le module de gestion de groupe 26 est propre à cesser la signalisation (i.e. à cesser l'émission de la trame de signalisation d'annonce de groupe) de la présence du groupe crée et ainsi complètement constitué.

A titre d'alternative l'annonce 50 (i.e. l'émission de la trame de signalisation d'annonce de groupe) se termine au bout d'un laps de temps prédéfini, ce qui permet avantageusement de limiter l'utilisation de la bande-passante et d'empêcher la détection inopportune des équipements contrôleurs, tels que les équipements contrôleurs 18 et 22 de la figure 1.

Lors d'une étape 52, le dispositif électronique D de gestion décentralisée du groupe de communication considéré en mode contrôleur M₁ reçoit et vérifie la validité de chaque trame de signalisation prédéterminée d'abonnement associée à chaque demande d'abonnement émise par des équipements distincts dont le ou les utilisateurs souhaite(nt) accéder au groupe de communication géré par ledit dispositif électronique D de gestion décentralisée du groupe de communication considéré en mode contrôleur M₁.

Selon une étape 54 du procédé P₁ de contrôleur, si le dispositif électronique D de gestion décentralisée du groupe de communication considéré en mode contrôleur M₁ a validé la ou les trames de signalisation prédéterminée d'abonnement et accepte en outre la ou les demande d'abonnement reçue(s), alors le dispositif électronique D en mode contrôleur M₁ répond à cette ou ces demande(s) d'abonnement en transmettant une trame de signalisation prédéterminée d'avis sur la demande d'abonnement ainsi que les éléments cryptographiques, générés par le module de sécurité 28, et nécessaires à ou aux équipements ayant requis l'abonnement pour qu'ils deviennent effectivement abonné(s) du groupe de communication dont le dispositif électronique D en mode contrôleur M₁ a en charge la gestion.

Selon un aspect optionnel particulier, le choix d'accueillir (i.e. d'accepter) un équipement requérant l'abonnement dans le groupe de communication géré par le dispositif électronique D en mode contrôleur M₁ est propre à être automatisé en fonction d'une configuration préalable prédéterminée dispositif électronique D en mode contrôleur M₁.

Selon des étapes non représentées du procédé P₁ de contrôleur, tout au long de l'existence du groupe de communication considéré géré par le dispositif électronique D en mode contrôleur M₁, le dispositif électronique D en mode contrôleur M₁ est propre à créer un service réseau et/ou communication disponible au sein dudit groupe de communication.

Plus précisément, l'étape de création de service consiste à ajouter une nouvelle capacité de communication selon un format prédéfini au groupe de communication considéré. Par exemple, un tel service consiste à créer une audioconférence ou à autoriser un échange de données. A chaque service de communication est associé un nom unique, un moyen de protection COMSEC (de l'anglais *communication security)* spécifique à ce service et une clé de protection de ce moyen de protection. Après création d'un tel service, le dispositif électronique D en mode contrôleur M₁ est propre à générer et à transmettre à destination de tous les abonnés courant du groupe de communication dont il a la charge une trame de signalisation spécifique représentative d'une modification des services réseau et/ou communication accessibles au sein dudit groupe de communication.

A l'inverse, l'étape de suppression de service consiste à supprimer un service en transmettant à nouveau une trame de signalisation spécifique représentative d'une modification des services réseau et/ou communication accessibles au sein dudit groupe de communication pour ordonner aux abonnés de détruire localement le service identifié au sein de ladite trame. A titre d'alternative, la clé de protection associée à un service à une durée de vie limitée, et l'expiration de ladite clé de protection vaut ordre de suppression locale dudit service par chaque abonné. Quel que soit le cas, un dispositif électronique D en mode abonné M₂ en présence d'un ordre de suppression de service supprime l'ensemble des paramètres relatifs à ce service supprimé dans l'équipement dans lequel il est embarqué.

Selon une autre étape non représentée, le dispositif électronique D en mode contrôleur M₁, via son module de gestion de groupe 26, délègue à un abonné des capacités de gestion associées au groupe de communication considéré en octroyant à cet abonné les droits associés lors de la phase d'abonnement comprenant les étapes 52 et 54. Par exemple, une telle délégation est transmise simultanément et/ou au sein de la trame de signalisation prédéterminée d'avis sur la demande d'abonnement transmise lors de l'étape 54.

Selon une étape 56 du procédé P₁ de contrôleur, le dispositif électronique D en mode contrôleur M₁ annule un abonnement (i.e. retirer un abonné dudit groupe) par transmission de nouvelles clés de protection des services du groupe de communication dont le dispositif électronique D en mode contrôleur M₁ a en charge la gestion, et ce à l'ensemble des abonnés dudit groupe de communication excepté l'abonné à révoquer (i.e. à retirer). En particulier, le dispositif électronique D en mode contrôleur M₁ transmet pour ce faire une trame de signalisation dédiée à l'ensemble des abonnés dudit groupe de communication excepté l'abonné à révoquer pour les informer de ce retrait et leur transmettre les nouvelles clés du groupe de communication considéré à utiliser en remplacement des clés utilisées préalablement au signalement de ce retrait.

De manière non représentée, un tel retrait d'un équipement abonné du groupe de communication peut être optionnellement déclenché à la demande d'un tel équipement abonné souhaitant se retirer, le dispositif électronique D en mode abonné M₂, étant propre à générer, via son module de retrait, une trame de signalisation prédéterminée de demande de retrait, et propre à effacer, via également son module de retrait, l'ensemble des éléments stockés relatifs au groupe de communication dont il requiert le désabonnement.

Selon une étape 58 du procédé P₁ de contrôleur, le dispositif électronique D en mode contrôleur M₁ détruit un groupe de communication dont il a la gestion en charge, en transmettant via son module de transmission/réception 36 une trame de signalisation prédéterminée de destruction à l'ensemble des abonnés dudit groupe de communication. Réciproquement, un dispositif électronique D en mode abonné M₂ recevant une telle trame de signalisation prédéterminée de destruction détruit de manière coopérative l'ensemble des éléments relatifs à ce groupe de communication. A titre d'alternative, le dispositif électronique D en mode contrôleur M₁ détruit un groupe de communication dont il a la gestion en charge, en limitant la durée de vie des clés cryptographiques associées audit groupe de communication à détruire, l'expiration des clés valant ordre de destruction du groupe de communication considéré. Une fois l'ordre de destruction de groupe de communication émis, le dispositif électronique D en mode contrôleur M₁ supprime l'ensemble des paramètres relatifs au groupe de communication à détruire stockés localement dans l'équipement dans lequel ledit dispositif électronique D est embarqué.

Selon une variante de réalisation non représentée, le dispositif électronique D en mode contrôleur M₁ met en oeuvre une constitution de groupe par agrégation.

En effet, dans certains scénarios opérationnels, deux groupes de communication sont amenés à fusionner pour ne former plus qu'un. Dans ce cas, un des dispositif électronique D en mode contrôleur M₁ d'un équipement contrôleur de groupe récupère les abonnés du second groupe et les ajoutent à son groupe.

Dans d'autres scénarios opérationnels, des groupes de communication peuvent être regroupés dans un groupe plus large les englobant. Dans ce cas, un nouveau groupe est créé et par exemple appelé « groupe de commandement », en étant administré par un contrôleur spécifique prédéterminé et en ayant pour abonnés les contrôleurs des groupes de communication à agréger. A l'initiative du groupe de commandement, des services de communications transverses à tous les groupes de communications peuvent ainsi être mise en place. Les équipements abonnés au groupe de commandement et à la fois contrôleur de leur propre groupe servent de passerelle pour relayer les configurations de gestion de groupe et les services de communications entre les groupes.

De manière duale au mode de fonctionnement contrôleur M₁ précédemment décrit en relation avec la figure 2, pour le rôle d'abonné identifié lors de l'étape 44, des services abonnés sont associés selon une étape 60 au mode de fonctionnement d'abonné M₂ et le procédé d'abonné P₂ est propre à être mis en oeuvre pour accéder à un groupe de communication.

Selon une étape 62 du procédé d'abonné P₂, le dispositif électronique D en mode abonné M₂ recherche un groupe de communication sur le réseau en générant et en transmettant, via son module de recherche de groupe, une trame de signalisation prédéterminée de recherche de groupe de communication. Un telle trame est par exemple émise à destination d'un groupe de communication particulier dont le dispositif électronique D en mode abonné M₂ connaitrait l'identifiant de groupe au préalable et/ou l'identifiant de l'équipement contrôleur qui en a la charge, ou à destination de tous les équipements disponibles embarquant un dispositif électronique D en mode contrôleur M₁.

En effet, un équipement n'est initialement pas dans un groupe de communication et peut ainsi chercher de lui-même un ou des groupes de communication visibles sur le ou les réseau(x) auquel(s) il appartient, ou alors comme indiqué précédemment recevoir au cours de cette même étape 62 des trames de signalisation prédéterminées d'annonce de groupe(s) de communication.

Selon une étape 64 du procédé d'abonné P₂, comme indiqué précédemment en relation avec la description du mode de fonctionnement dual de contrôleur M₁, le dispositif électronique D en mode abonné M₂ transmet une demande d'abonnement sous la forme d'une trame de signalisation prédéterminée d'abonnement, via le module de transmission/réception 36, à destination du dispositif électronique D de gestion décentralisée du groupe de communication considéré en mode contrôleur M₁. Une telle trame de signalisation prédéterminée d'abonnement comprend les identifiants dudit équipement souhaitant s'abonner ainsi que les éléments nécessaires pour établir un canal sécurisé entre ledit équipement souhaitant s'abonner et l'équipement contrôleur embarquant dispositif électronique D de gestion décentralisée du groupe de communication considéré en mode contrôleur M₁, autrement dit, des éléments permettant à ces deux équipements de d'authentifier mutuellement.

Selon un aspect particulier la trame de signalisation de recherche précitée vaut également trame de signalisation d'abonnement.

Selon une étape 66 du procédé d'abonné P₂, comme indiqué précédemment en relation avec la description du mode de fonctionnement dual de contrôleur M₁, le dispositif électronique D en mode abonné M₂ reçoit un avis sur sa demande d'abonnement émis par le dispositif électronique D en mode contrôleur M₁ qui a en charge la gestion du groupe de communication auquel le dispositif électronique D en mode abonné M₂ souhaite s'abonner. En particulier, lorsque cet avis est positif (i.e. le dispositif électronique D en mode contrôleur M₁ autorise le dispositif électronique D en mode abonné M₂ à accéder au groupe de communication dont il a la charge) l'équipement embarquant le dispositif électronique D en mode abonné M₂ est officiellement intégré au groupe de communication considéré et prend officiellement le rôle d'abonné dans ce groupe de communication.

Il est à noter que préalablement à cette intégration officielle d'un équipement en tant qu'abonné au sein d'un groupe de communication, chaque dispositif électronique D en mode contrôleur M₁, ou en mode abonné M₂, requiert un premier niveau de connectivité permettant aux équipements pas encore associés dans des groupes d'échanger entre eux la signalisation liée au protocole (i.e. procédé) de gestion de groupe. Cette connectivité initiale est nommée canal de recueil ou canal transverse et est propre à prendre plusieurs formes, via des échanges directs sur NFC, Bluetooth, un service dédié sur un des réseaux supports des services des groupes de communication.

Selon une étape 68 du procédé d'abonné P₂, le dispositif électronique D en mode abonné M₂ reçoit des trames de signalisation spécifiques représentatives d'une modification du groupe de communication que ce soit en termes d'abonné lors d'un retrait ou d'un ajout d'abonné au groupe de communication, ou en termes de service réseaux et/ou communication en cas de retrait ou ajout d'un tel service au groupe de communication considéré. De telles trames permettent au dispositif électronique D en mode abonné M₂ de procéder à une mise à jour des éléments relatifs au groupe de communication considéré que ce soit en termes de services et/ou de clés cryptographiques.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

On conçoit ainsi que le dispositif électronique D de gestion décentralisée de groupes de communication ainsi que les procédés de contrôleur P₁ et d'abonné P₂ permet une mise en relation sécurisée d'équipements de communications sans requérir une infrastructure de gestion centralisée pour résoudre la problématique de la distribution des clés au sein des groupes de communications.

En effet, selon l'invention, il est proposé d'embarquer dans l'équipement de communication, en plus des services réseaux et utilisateur, un service dit de gestion de groupe de communication, mis en oeuvre par le dispositif électronique D de gestion décentralisée de groupes de communication, fonctionnant suivant deux modes duaux, à savoir le mode contrôleur M₁ qui permet la création et la gestion de groupe de communication, et le mode abonné M₂ qui permet l'accès aux groupes de communication et l'utilisation de leurs services.

Ainsi, chaque équipement de communication dispose de cette fonction de gestion décentralisée de groupe et ce de manière identique et générique (i.e. standard) d'un équipement à un autre, pour mettre en oeuvre un protocole de communication sécurisé qui assure la communication entre les fonctions de gestion de groupe de chaque équipement. Autrement dit, le protocole de gestion de groupes, comprenant les procédés duaux P₁ et P₂ précédemment décrits, assure donc l'échange sécurisé de messages entre l'équipement contrôleur et les équipements abonnés, et au terme de ces messages, aura permis l'établissement du groupe de communication et des services qu'il supporte, et ce pour la durée de la mission associée, ce qui réduit le niveau de sensibilité de la fonction de gestion de groupe de communication.

L'équipement de communication, proposé selon la présente invention et comprenant le dispositif électronique D, via sa fonction de gestion de groupe équivaut, pour un groupe de communication, à une ressource cryptographique. Sans cette fonction, l'utilisation d'un poste de gestion centralisé selon l'état de la technique deviendrait nécessaire et permet l'utilisation du protocole de gestion de groupe sur différents supports réseau.

Ainsi, le protocole spécifié selon la présente invention permet de constituer, de façon *ad hoc* et décentralisée sur le périmètre de chaque équipement, des groupes d'équipements pouvant communiquer entre eux de manière sécurisée, voire également de rassembler des groupes de communications pour former des ensembles plus grands, et ce nécessitant uniquement la présence d'une capacité de communication entre les équipements.

Chaque groupe de communication obtenu selon la présente invention se gère ainsi de façon autonome, un membre d'un groupe de communication, notamment un chef de groupe de communication pouvant toutefois appartenir à deux groupes de communication distincts à savoir celui dont il est le contrôleur et un autre groupe de communication dont il est l'abonné et par exemple contrôlé par un chef de section hiérarchiquement supérieur.

La gestion de groupe proposée selon la présente invention, est ainsi propre à être basée sur la définition opérationnelle des groupes par l'opérationnel en préparation de mission par exemple, et permet une configuration dynamique des fonctions réseaux des groupes de communication créés.

## Revendications

1. Dispositif (D) électronique de gestion décentralisée de groupe(s) de communication, **caractérisé en ce que** le dispositif (D) est un dispositif électronique de communication propre à fonctionner selon au moins deux modes de fonctionnement duaux (M₁, M₂) comprenant :
- un mode contrôleur (M₁) configuré pour créer et gérer au moins un groupe de communication ;
- un mode abonné (M₂) configuré pour accéder à au moins un groupe de communication existant et pour utiliser les services de communication associés audit au moins un groupe de communication existant ;
le dispositif (D) comprenant un module de transmission/réception (36) de trame(s) de signalisation associées à la gestion dudit au moins un groupe de communication, et comprend, pour mettre en oeuvre le mode contrôleur, un module de gestion de groupe (26) propre à :
+ configurer au moins une interface réseau en fonction de la mission associée audit au moins un groupe de communication ;
+ configurer le ou les services réseaux et communication associés à au moins un réseau, et nécessaire(s) à la mission associée audit au moins un groupe de communication géré par ledit dispositif électronique de gestion décentralisée de groupe(s) de communication en mode contrôleur ;
ledit module de gestion de groupe (26) est en outre configuré pour :
+ créer ledit au moins un groupe de communication en générant une liste de services réseaux et communication associés audit groupe et le nombre maximal d'abonnés possible audit groupe;
+ rendre ledit au moins un groupe de communication visible sur au moins un réseau en signalant sa présence par génération, et transmission via le module de transmission/réception, d'une trame de signalisation prédéterminée d'annonce sur une durée prédéfinie ;
+ authentifier au moins un autre dispositif électronique de communication distinct dudit dispositif électronique de gestion décentralisée de groupe(s) de communication en mode contrôleur et s'authentifier auprès dudit au moins un autre dispositif électronique de communication ;
+ autoriser, lors d'une phase d'abonnement, l'accès audit groupe de communication à au moins un autre dispositif électronique de communication distinct dudit dispositif électronique de gestion décentralisée de groupe(s) de communication en mode contrôleur, ledit au moins un autre dispositif électronique de communication devenant abonné dudit groupe de communication ;
+ créer ou supprimer un service réseaux et communication disponible au sein dudit groupe de communication respectivement en ajoutant, ou en supprimant, une nouvelle capacité de communication selon un format prédéfini et en générant, et transmettant via le module de transmission/réception, aux abonnés dudit au moins un groupe une trame de signalisation prédéterminée de création, ou respectivement de suppression, de service ;
+ détruire ledit au moins un groupe de communication par génération, et transmission via le module de transmission/réception, une trame de signalisation prédéterminée de destruction à l'ensemble des abonnés dudit au moins un groupe de communication, en fonction de la durée de la mission associée audit au moins un groupe.

2. Dispositif (D) selon la revendication 1, dans lequel le mode contrôleur (M₁) est activé en fonction du rôle de l'utilisateur au sein dudit au moins groupe de communication, le mode abonné (M₂) étant disponible par défaut.

3. Dispositif (D) selon la revendication 1 ou 2, dans lequel le dispositif (D) comprend, pour mettre en oeuvre le mode contrôleur, au moins :
- un module de sécurité (28) propre à fournir audit module de gestion de groupe les fonctions cryptographiques nécessaires à :
+ la négociation de clés de session et d'appairage entre le dispositif en mode contrôleur et le ou les dispositif(s) en mode abonné,
+ l'authentification de chaque autre dispositif électronique de communication propre à requérir l'accès audit au moins un groupe de communication géré par ledit dispositif électronique de gestion décentralisée de groupe(s) de communication en mode contrôleur,
+ la sécurisation des échanges au sein dudit au moins un groupe de communication, et
+ la génération de clés de protection des services réseaux nécessaire(s) à la mission associée audit au moins un groupe de communication ;
- un ou plusieurs module(s) (30, 32) de gestion de réseaux propres à :
+ l'identification des ressources réseaux disponibles sur le réseau support des services du groupe de communication,
+ l'allocation desdites ressources au groupe de communication pour la mise en oeuvre de ses services,
+ la génération des paramètres de configuration de l'interface réseau.

4. Dispositif (D) selon l'une quelconque des revendications précédentes, dans lequel ledit module de gestion de groupe (26) est en outre configuré pour déléguer à au moins un abonné des capacités de gestion associées audit au moins un groupe de communication en octroyant audit au moins un abonné les droits associés lors de la phase d'abonnement.

5. Dispositif (D) selon l'une quelconques des revendications précédentes, dans lequel ledit module de gestion de groupe (26) est en outre configuré pour retirer un abonné dudit au moins un groupe de communication en :
- générant de nouvelles clés de protection des services réseaux nécessaire(s) à la mission associée audit au moins un groupe de communication, et en,
- transmettant via le module de transmission/réception, au sein d'une trame de signalisation prédéterminée de retrait d'abonné, lesdites nouvelles clés de protection à l'ensemble des abonnés dudit groupe excepté l'abonné à retirer dudit au moins un groupe de communication.

6. Dispositif (D) selon l'une quelconque des revendications 3 à 5, dans lequel le dispositif comprend, pour mettre en oeuvre le mode abonné, au moins :
- un module de recherche de groupe de communication propre à générer une trame de signalisation prédéterminée de recherche de groupe à destination d'un dispositif électronique de gestion décentralisée de groupe(s) de communication en mode contrôleur d'un groupe de communication prédéterminé, ou à destination de tout autre dispositif électronique de gestion décentralisée de groupe(s) de communication en mode contrôleur ;
- un module d'abonnement propre à générer une trame de signalisation prédéterminée d'abonnement, à transmettre via ledit module de transmission/réception, à destination d'un dispositif électronique de gestion décentralisée de groupe(s) de communication en mode contrôleur d'un groupe de communication prédéterminé,
- un module de retrait propre à générer une trame de signalisation prédéterminée de demande de retrait d'un groupe de communication auquel ledit dispositif est abonné, et propre à effacer tout élément relatif audit groupe de communication auquel ledit dispositif signifie son retrait.

7. Dispositif (D) selon l'une quelconque des revendications précédentes, comprenant en outre un compteur monotone strictement croissant, initialisé à une valeur aléatoire, incrémenté de un à chaque envoi de trame de signalisation.

8. Dispositif (D) selon l'une quelconque des revendications précédentes, comprenant en outre une interface homme machine.

9. Groupe de communication dans lequel le dispositif électronique de communication (D) de chaque utilisateur dudit groupe de communication est :
- identique audit dispositif électronique de gestion (D) décentralisée de groupe(s) de communication selon l'une quelconque des revendications précédentes, et
- associé à un identifiant unique et distinct de chaque identifiant unique associé à chaque autre dispositif électronique de communication de chaque utilisateur dudit groupe de communication.

## Patentansprüche

1. Elektronische Vorrichtung (D) zur dezentralisierten Verwaltung von Kommunikationsgruppe(n), **dadurch gekennzeichnet, dass** die Vorrichtung (D) eine elektronische Kommunikationsvorrichtung ist, die imstande ist, gemäß mindestens zwei dualen Betriebsmodi (M₁, M₂) zu funktionieren, umfassend:
- einen Controllermodus (M₁), der derart konfiguriert ist, dass er mindestens eine Kommunikationsgruppe erstellt und verwaltet;
- einen Teilnehmermodus (M₂), der derart konfiguriert ist, dass er auf mindestens eine bestehende Kommunikationsgruppe zugreift und zur Nutzung von Kommunikationsdiensten, die der mindestens einen bestehenden Kommunikationsgruppe zugeordnet sind;
wobei die Vorrichtung (D) ein Sende-/Empfangsmodul (36) von Signalisierungsframe(s) umfasst, die der Verwaltung der mindestens einen Kommunikationsgruppe zugeordnet sind, und zum Ausführen des Controllermodus ein Gruppenverwaltungsmodul (26) umfasst, das imstande ist:
+ mindestens eine Netzwerkschnittstelle entsprechend der mindestens einen Kommunikationsgruppe zugeordneten Mission zu konfigurieren;
+ das oder die Netzwerk- und Kommunikationsdienste, die dem mindestens einen Netzwerk zugeordnet sind und die für die Mission notwendig ist/sind, die der mindestens einen Kommunikationsgruppe zugeordnet ist, die von der elektronischen Vorrichtung zur dezentralisierten Verwaltung von Kommunikationsgruppe(n) im Controllermodus verwaltet wird, zu konfigurieren;
wobei das Gruppenverwaltungsmodul (26) ferner konfiguriert ist, um:
+ die mindestens einen Kommunikationsgruppe durch Erstellen einer Liste von Netzwerk- und Kommunikationsdiensten, die der Gruppe zugeordnet sind, und die maximal möglichen Anzahl von Teilnehmern der Gruppe zu erstellen;
+ die mindestens eine Kommunikationsgruppe in mindestens einem Netzwerk durch Signalisieren ihrer Anwesenheit durch Erzeugen und Übertragen über das Sende-/Empfangsmodul eines vorbestimmten Ankündigungs-Signalisierungsframes über eine vorbestimmte Dauer sichtbar zu machen;
+ mindestens eine andere elektronische Kommunikationsvorrichtung, die von der elektronischen Vorrichtung zur dezentralisierte Verwaltung von Kommunikationsgruppe(n) im Controllermodus verschieden ist, zu authentifizieren, und sich bei der mindestens einen anderen elektronischen Kommunikationsvorrichtung zu authentifizieren;
+ während einer Teilnahmephase mindestens einer anderen elektronischen Kommunikationsvorrichtung, die von der elektronischen Vorrichtung zur dezentralisierte Verwaltung von Kommunikationsgruppe(n) im Controllermodus verschieden ist, den Zugriff auf die Kommunikationsgruppe zu genehmigen, wobei die mindestens eine andere elektronische Kommunikationsvorrichtung Teilnehmer der Kommunikationsgruppe wird;
+ einen innerhalb der Kommunikationsgruppe verfügbaren Netzwerk- und Kommunikationsdienst jeweils durch Hinzufügen oder Löschen einer neuen Kommunikationskapazität gemäß einem vorbestimmten Format und durch Erstellen und Übertragen über das Sende-/Empfangsmodul an die Teilnehmer der mindestens einen Gruppe einen vorbestimmten Signalisierungsframe zur Erstellung oder beziehungsweise zur Löschung eines Dienstes zu erstellen oder zu löschen;
+ die mindestens eine Kommunikationsgruppe durch Erzeugen und Übertragen über das Sende-/Empfangsmodul eines vorbestimmten Vernichtungs-Signalframes an alle Teilnehmer der mindestens einen Kommunikationsgruppe in Abhängigkeit von der Dauer der Mission, die der mindestens einen Gruppe zugeordnet ist, zu vernichten.

2. Vorrichtung (D) nach Anspruch 1, wobei der Controllermodus (M₁) in Abhängigkeit von der Rolle des Benutzers innerhalb der mindestens einen Kommunikationsgruppe aktiviert ist, wobei der Teilnehmermodus (M₂) standardmäßig verfügbar ist.

3. Vorrichtung (D) nach Anspruch 1 oder 2, wobei die Vorrichtung (D) zum Ausführen des Controllermodus mindestens umfasst:
- ein Sicherheitsmodul (28), das imstande ist, dem Gruppenverwaltungsmodul die kryptografischen Funktionen bereitzustellen, die erforderlich sind zum:
+ Aushandeln von Sitzungs- und Pairing-Schlüsseln zwischen der Vorrichtung im Controllermodus und der oder den Vorrichtung(en) im Teilnehmermodus,
+ Authentifizieren jeder anderen elektronischen Kommunikationsvorrichtung, die imstande ist, den Zugriff auf mindestens eine Kommunikationsgruppe anzufordern, die von der elektronischen Vorrichtung zur dezentralisierten Verwaltung von Kommunikationsgruppe(n) im Controllermodus verwaltet wird,
+ Sichern des Austauschs innerhalb der mindestens einen Kommunikationsgruppe, und
+ Erzeugen von Schutzschlüsseln für Netzwerkdienste, die für die Mission erforderlich sind, die der mindestens einen Kommunikationsgruppe zugeordnet ist;
- ein oder mehrere Modul(e) (30, 32) zur Verwaltung von Netzwerken, die imstande sind:
+ verfügbare Netzwerkressourcen im Trägernetz der Dienste der Kommunikationsgruppe zu identifizieren,
+ der Kommunikationsgruppe zur Ausführung ihrer Dienste die Ressourcen zuzuteilen,
+ Konfigurationsparameter der Netzwerkschnittstelle zu erzeugen.

4. Vorrichtung (D) nach einem der vorhergehenden Ansprüche, wobei das Gruppenverwaltungsmodul (26) ferner derart konfiguriert ist, dass es Verwaltungsfähigkeiten, die der mindestens einen Kommunikationsgruppe zugeordnet sind, an mindestens einen Teilnehmer delegiert, indem es dem mindestens einem Teilnehmer die zugehörigen Rechte während der Teilnahmephase gewährt.

5. Vorrichtung (D) nach einem der vorhergehenden Ansprüche, wobei das Gruppenverwaltungsmodul (26) ferner derart konfiguriert ist, dass es einen Teilnehmer aus mindestens einer Kommunikationsgruppe entfernt, indem es:
- neue Schutzschlüssel für Netzwerkdienste, die für die Mission erforderlich sind, die der mindestens einen Kommunikationsgruppe zugeordnet sind, erzeugt, und
- über das Sende-/Empfangsmodul innerhalb eines vorbestimmten Signalisierungsframes für die Teilnehmerentfernung die neuen Schutzschlüssel an alle Teilnehmer der Gruppe mit Ausnahme des Teilnehmers, der aus der mindestens einen Kommunikationsgruppe entfernt werden soll, überträgt.

6. Vorrichtung (D) nach einem der Ansprüche 3 bis 5, wobei die Vorrichtung zur Ausführung des Teilnehmermodus mindestens umfasst:
- ein Kommunikationsgruppensuchmodul, das imstande ist, einen vorbestimmten Gruppensuch-Signalisierungsframe für eine elektronische Vorrichtung zur dezentralisierten Verwaltung von Kommunikationsgruppe(n) im Controllermodus einer vorbestimmten Kommunikationsgruppe oder für jede andere elektronische Vorrichtung zur dezentralisierte Verwaltung von Kommunikationsgruppe(n) im Controllermodus zu erzeugen;
- ein Teilnehmermodul, das imstande ist, einen vorbestimmten Teilnahme-Signalisierungsframe zu erzeugen, über das Sende-/Empfangsmodul an eine elektronische Vorrichtung zur dezentralisierten Verwaltung von Kommunikationsgruppe(n) im Controllermodus einer vorbestimmten Kommunikationsgruppe zu übertragen,
- ein Entfernungsmodul, das imstande ist, einen vorbestimmten Signalisierungsframe für die Anforderung der Entfernung aus einer Kommunikationsgruppe zu erzeugen, deren Teilnehmer die Vorrichtung ist, und imstande, jedes Element zu löschen, das sich auf die Kommunikationsgruppe bezieht, der die Vorrichtung ihre Entfernung mitteilt.

7. Vorrichtung (D) nach einem der vorhergehenden Ansprüche, die ferner einen strikt zunehmenden monotonen Zähler umfasst, der auf einen Zufallswert initialisiert ist und bei jedem Senden eines Signalisierungsframes um eins inkrementiert wird.

8. Vorrichtung (D) nach einem der vorhergehenden Ansprüche, die ferner eine Mensch-Maschine-Schnittstelle umfasst.

9. Kommunikationsgruppe, wobei die elektronische Kommunikationsvorrichtung (D) jedes Benutzers der Kommunikationsgruppe:
- mit der elektronischen Vorrichtung zur dezentralisierten Verwaltung (D) von Kommunikationsgruppe(n) nach einem der vorhergehenden Ansprüche identisch ist, und
- einer eindeutigen Kennung zugeordnet ist und von jeder eindeutigen Kennung, die jedem anderen elektronischen Kommunikationsvorrichtung jedes Benutzers der Kommunikationsgruppe zugeordnet ist, verschieden ist.

## Claims

1. An electronic device (D) for decentralised management of communication group(s), **characterised in that** the device (D) is an electronic communication device configured to operate in at least two dual modes of operation (M₁, M₂) comprising:
- a controller mode (M₁) configured to create and manage at least one communication group;
- a subscriber mode (M₂) configured to access at least one existing communication group and to use the communication services associated with said at least one existing communication group;
the device (D) comprising a module (36) for transmitting/receiving signalling frame(s) associated with the management of said at least one communication group, and comprises, for implementing the controller mode, a group management module (26) configured to:
+ configure at least one network interface according to the mission associated with the at least one communication group;
+ configure the network and communication service(s) associated with at least one network, and necessary for the mission associated with said at least one communication group managed by said electronic device for decentralised communication group management in controller mode;
said group management module (26) is further configured to:
+ create said at least one communication group by generating a list of network and communication services associated with said group and the maximum possible number of subscribers to said group;
+ make said at least one communication group visible on at least one network by signalling its presence by generating, and transmitting via the transmitting/receiving module, a predetermined announcement signalling frame over a predefined duration;
+ authenticate at least one other electronic communication device distinct from said electronic device for decentralised management of communication group(s) in controller mode and authenticating with said at least one other electronic communication device;
+ authorise, during a subscription phase, access to said communication group for at least one other electronic communication device distinct from said electronic device for decentralised management of communication group(s) in controller mode, said at least one other electronic communication device becoming a subscriber of said communication group;
+ create or delete a network and communication service available within said communication group respectively by adding, or deleting, a new communication capacity according to a predefined format and by generating, and transmitting via the transmitting/receiving module, to the subscribers of said at least one group, a predetermined signalling frame of service creation, or respectively deletion;
+ destroy said at least one communication group by generating, and transmitting via the transmitting/receiving module, a predetermined destruction signalling frame to all subscribers of said at least one communication group, depending on the duration of the mission associated with said at least one group.

2. The device (D) according to claim 1, wherein the controller mode (M₁) is activated depending on the role of the user within the at least one communication group, the subscriber mode (M₂) being available by default.

3. The device (D) according to claim 1 or 2, wherein the device (D) comprises, to implement the controller mode, at least:
- a security module (28) adapted to provide said group management module with the cryptographic functions necessary to:
+ negotiate session and pairing keys between the controller mode device and the subscriber mode device(s),
+ authenticate every other electronic communication device configured to request access to said at least one communication group managed by said electronic device for decentralised management of communication group(s) in controller mode,
+ secure exchanges within the at least one communication group, and
+ generate network service protection keys necessary for the mission associated with at least one communication group;
- one or more network management modules (30, 32) configured to:
+ identify the network resources available on the network supporting the services of the communication group,
+ allocate these resources to the communication group for the implementation of its services,
+ generate network interface configuration parameters.

4. The device (D) according to any of the preceding claims, wherein said group management module (26) is further configured to delegate to at least one subscriber management capabilities associated with said at least one communication group by granting said at least one subscriber the associated rights during the subscription phase.

5. The device (D) according to any of the preceding claims, wherein said group management module (26) is further configured to withdraw a subscriber from said at least one communication group by:
+ generating new network service protection keys necessary for the mission associated with at least one communication group, and by
- transmitting via the transmitting/receiving module, within a predetermined subscriber withdrawal signalling frame, said new protection keys to all the subscribers of said group except the subscriber to be withdrawn from said at least one communication group.

6. The device (D) according to any one of claims 3 to 5, wherein the device comprises, to implement the subscriber mode, at least:
- a communication group search module adapted to generate a predetermined group search signalling frame intended for a decentralised communication group management electronic device in controller mode of a predetermined communication group, or to any other decentralised communication group management electronic device in controller mode;
- a subscription module adapted to generate a predetermined subscription signalling frame, to be transmitted via said transmitting/receiving module, intended for an electronic device for decentralised management of communication group(s) in controller mode of a predetermined communication group,
- a withdrawal module adapted to generate a predetermined signalling frame requesting withdrawal from a communication group to which said device is subscribed, and adapted to delete any element related to said communication group to which said device signifies its withdrawal.

7. The device (D) according to any of the preceding claims, further comprising a strictly increasing monotonic counter, initialized to a random value, incremented by one each time a signalling frame is sent.

8. The device (D) according to any of the preceding claims, further comprising a human-machine interface.

9. A communication group wherein the electronic communication device (D) of each user of said communication group is:
- identical to said electronic device (D) for decentralised management of communication group(s) according to any of the preceding claims, and
- associated with a unique identifier and separate from each unique identifier associated with each other electronic communication device of each user of said communication group.
